Europäisches Patentamt

European Patent Office

Office européen des brevets

(11) Publication number: **0 330 392**

**A1**

(12) # EUROPEAN PATENT APPLICATION

(21) Application number: **89301597.4**

(22) Date of filing: **20.02.89**

(51) Int. Cl.4: **E01F 9/01 , F21Q 3/00 , F21V 21/10 , //B60Q7/00**

(30) Priority: **20.02.88 GB 8804006**

(43) Date of publication of application:
**30.08.89 Bulletin 89/35**

(84) Designated Contracting States:
**AT BE CH DE ES FR GB GR IT LI LU NL SE**

(71) Applicant: **Webb, Ronald Richard**
**Alpha House Timothy's Bridge Road**
**Stratford-Upon-Avon Warwickshire CV37 9NQ(GB)**

(72) Inventor: **Webb, Ronald Richard**
**Alpha House Timothy's Bridge Road**
**Stratford-Upon-Avon Warwickshire CV37 9NQ(GB)**

(74) Representative: **Tillbrook, Christopher John**
**Chris J Tillbrook & Co 5 Old Rectory Close**
**Churchover**
**Rugby, Warwickshire CV23 0EN(GB)**

(54) Illuminated marker or warning cone.

(57) A power supply housing (125, 208) is located within the lower part of the cone body (120, 210), e.g. in the integral annular base (206) of an open-bottomed cone (210). Stacking of the cones is made possible by a readily-detachable coupling assembly (220) for mounting the lamp unit (250) on the top (211) of the cone (210). One such coupling assembly may be held in position by means of a plate comprising a tapered skirt and caused to wedge up into the hollow apex of the cone.

FIGURE 7

## Illuminated Warning or Marker Cone

This invention relates to marker or warning indicator and general illumination lights and is particularly, but not exclusively, concerned with the illumination or lighting of traffic warning cones, of which large numbers are in widespread use and embraces both a new cone construction and an adaptation of existing cones.

An illuminated warning cone is set out in my co-pending UK patent application no. 8723932, and my corresponding European (EPC) patent application no. 88309529.1, involving a cone base housing a battery pack and an internally-illuminated 'light-tube' mounted upright in the cone nose and braced at its foot by the cone. Provision is made for illuminating the tube optionally both within and/or outside the cone.

Under some prevailing road traffic conditions and other relevant regulations, illumination of the cone as a whole is not allowed, particularly since the outer surface of the cone is commonly marked red or orange and an illuminated red warning at ground level could be mistaken for a stop signal - with potentially serious consequences. Even where not forbidden as such, illumination of the cone base may simply not be required.

It may also be desirable, or necessary under regulation, to increase the illumination outside the cone to or beyond a certain minimum. In that regard minimum physical sizes may be prescribed for the external or outer lamp portion, for which a tube configuration alone would not necessarily be appropriate.

A light tube, such as previously taught by me in UK patent application no. 87232932 and EPC no. 88309529.1, may thus need to be adapted at one end to provide this larger lamp size, without unduly increasing the overall tube cross-sectional size.

According to one aspect of the invention there is provided an illuminated warning or marker cone comprising:
a tapered cross-section or conical base portion (210);
a power supply housing (208) located within the base portion;
a light source (250) mounted upon the cone nose; and
a connector (220, 209) between the light source and power supply housing.

Conveniently, a connector tube extends through the nose of the cone; and a lamp lens assembly is (detachably) mounted on the upper and outer end of the connector, with a light source located within the lens assembly.

In practice, electrical and electronic control circuitry may be connected between the power supply and the light source for controlling the operation thereof.

In a particular construction, the cone incorporates an annular base portion, allowing cones to be stacked, one upon another.

Desirably, the power supply is configured to lie within such an annular base portion, so as not to obstruct cone stacking, while the power supply remains in situ.

Conveniently, the power supply comprises a plurality of individual battery packs, standing one upon another and cooperatively interconnected.

The lamp is preferably detachably mounted, for example by a wedge-action opposed pair of clamping washers, spreading the clamping and mounting loads over the side walls of the cone.

Desirably, an on-off switch is mounted in the casing wall of the cone, to enable control of operation from externally of the cone.

Alternatively, the mounting of the lamp itself may be integrated with an electrical switch - so that, for example, movement by twisting and/or turning of the lamp relative to the cone, will effect operation of the lamp on/off or other mode of operation switch.

Preferably, the cone lens is of the diffuser or Fresnel type, in order to enhance the light spread from the internal light source.

The overall diameter and intensity of such a light can be selected to meet relevant regulations.

Conveniently, the assembly is fabricated from synthetic plastics material.

Between the Fresnel diffuser ribs of the lamp may be incorporated a convex/concave surface profile, to control the vertical beam depth.

The cone may be provided with a bottom or underside flange, with optional peripheral weighting in an annular peripheral pocket thereof.

One or more individual battery casings may be located in the annular power supply housing in the cone base, for example, with access through apertures, closed by blanking plates, in the base wall itself, or by a removable base plate.

There now follows a description of a particular embodiment of the invention, by way of example only, with reference to the accompanying diagrammatic and schematic drawings, in which:

Figure 1 shows a broken, part cut-away, sectional view of a light cone;

Figure 2 shows a side elevation of the light shown in Figure 1;

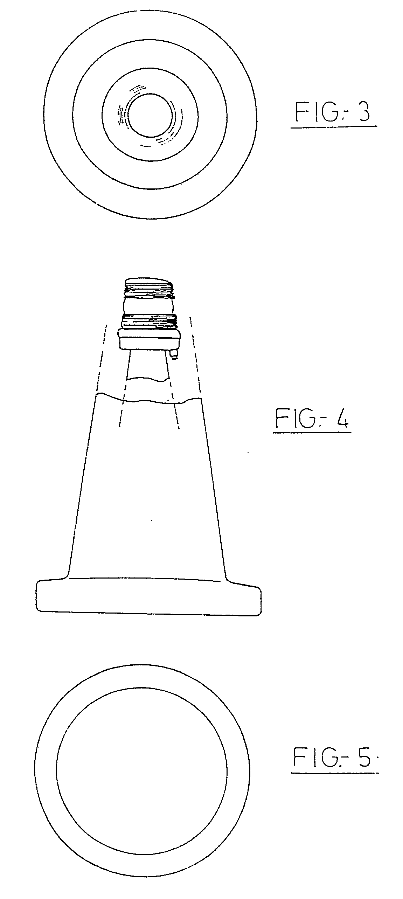

Figure 3 shows an upper plan view of the light cone shown in Figure 4;

Figure 4 shows a side elevation of the light tube shown in Figures 1 and 2, on a reduced scale;

Figure 5 shows an underneath plan view of the light cone shown in Figures 3 and 4;

Figure 6 shows a canted or inclined part-sectional view (symmetrical about the centre line) of a variant of the cone incorporating provision for an annular configuration base power supply allowing multiple cone stacking;

Figure 7 shows how the cones of Figure 6 stack one-upon-another;

Figure 8 shows a part cut-away underside or base view of the cone shown in Figures 6 and 7; and

Figure 9 shows a detailed, on an enlarged scale, of an alternative lamp mounting arrangement for the cone shown in figures 6, 7 and 8.

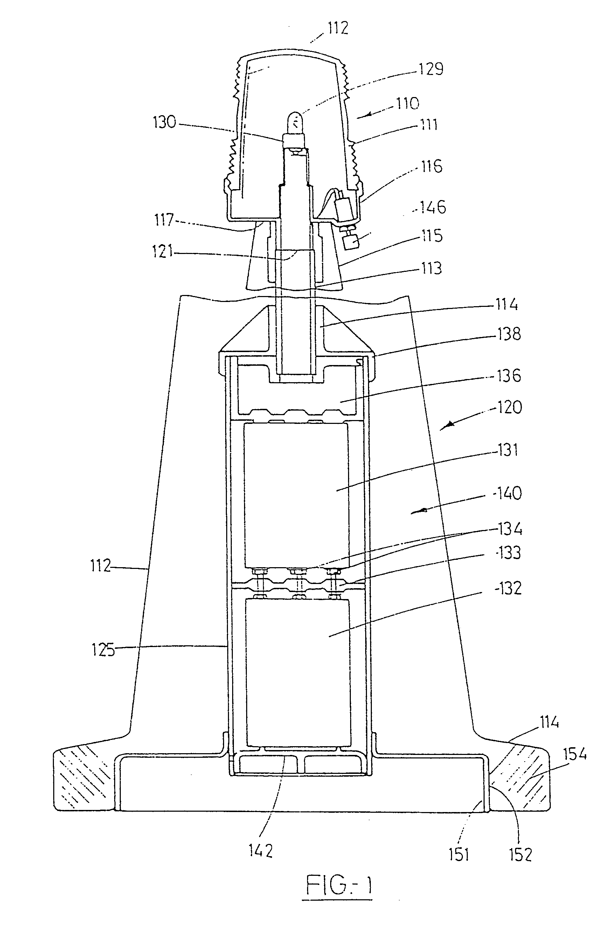

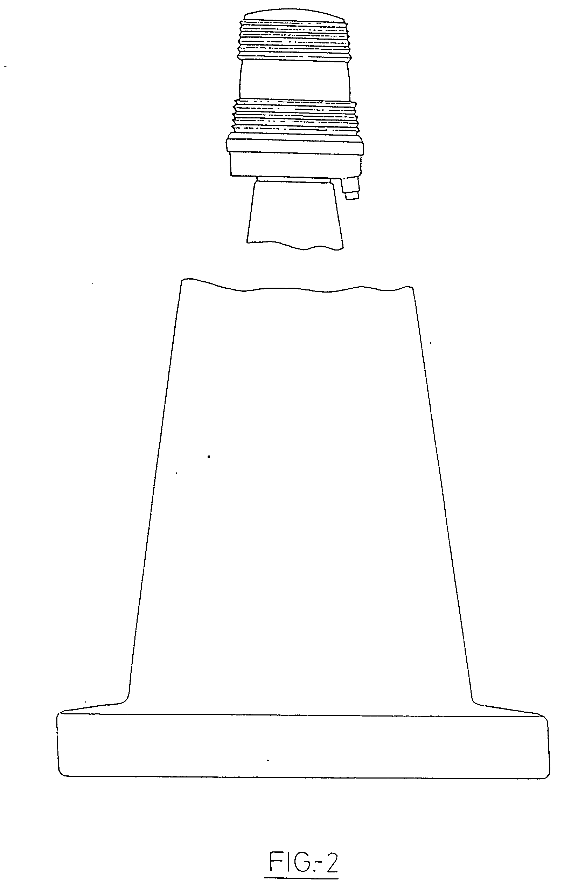

Although only the respective upper and lower portions of the cone are depicted in the Figures 1 and 2, for convenience of illustrative scale, (ie. the particular cone is too tall to fit on to the page in its entirety), it should be appreciated that the cone tapers progressively from the (lower) base to the (upper) nose.

Referring to the drawings, a light cone, that is to say, an illuminated warning cone, comprises a conical base portion 120 surmounted by a lamp or light source 110, incorporating an electrical bulb as a light source 129 and a diffuser Fresnel type outer lens housing 111, in order to achieve the most beneficial intensity and spread of light.

A bulb holder 130 is mounted in the upper end of a lower lamp casing 116, fitted, through a connection 121, upon a light tube 113, itself mounted in the throat 114 of a cap 138 of a power supply housing 125, in the form of a hollow cylinder.

The lens 111 is secured in a base collar 116 with a tubular under surface which is received in the light tube 13 through a connection 121.

Two power packs, for example dry cell, or sealed-for-life, re-chargeable batteries 131, 132 are stacked one-upon-another within the housing 125 and are co-operatively interconnected electrically by spring-loaded contact arrays 134 mounted on a spacer support plate 133 acting as an internal bridge and dividing wall in the casing 125.

At the upper end of the casing 125 is located an electronic control pack 136, in a sealed container, for controlling the lamp operating mode, through the connection of the batteries 131, 132 to the light bulb 129, for example regulating the supply voltage or current - and thus bulb output intensity - and providing an intermittent or flashing warning at a prescribed rate.

Provision may also be made for remote triggering, for example, by an infra-red beam to a sensor receptor and decoder/receiver in the control pack 136, whereby, say, a transmitter carried by a passing police patrol or maintenance car can be deployed to trigger the cone light operation on and off - or to vary the signalling pattern or intensity.

Automatic (photocell-activated) daylight sensing could also be incorporated to drive the light brighter in daytime than at night.

Similarly, by providing movable filters or different coloured light sources, so the colour of the light could be altered by remote control - for example to an orange or white flashing beacon for general warning use, to a blue light indicating police authority or a red light for dire stop emergency situations, all according to prevailing regulations.

A rotating beacon, for example with a rotating mirror reflector for high-intensity flashing, could be mounted on the cone head.

Indeed, a quick-release mechanical and electrical contact connection 121 could be incorporated in the cone head 115, to allow a ready change of light source, or even just to facilitate replacement as a modular unit in the event of bulb failure.

On the surface of the cone layers of electrically-energised fluorescent material could be attached, for example sandwiched between plastics sheet for weather-protection. Indeed, most - if not the entire - cone illumination could be provided in this way, rather than relying upon a single light source at the cone head.

The base 114 of the cone is flared in the conventional manner, but incorporates an integrally-moulded underside recess 152, receiving as a press-fit, with optional additional fasteners (not shown) a base cap 151, in which is mounted the lower end of the power supply casing 125. The latter is installed with its own press-fit bottom end-cap 142 supporting and securing in position the batteries 131, 132.

Thus, replacing the batteries 131, 132, is simply a matter of upturning the cone 120, removing the end-cap 142 and sliding the batteries out; the bridge-plate 133 is axially-movable within the casing 125 to accommodate an equilibrium of spring loading of the two batteries 131, 132. Alternatively, the upper battery 131 can be removed by parting the casing 125 from the upper end cap 138. In either case, again quick-release, snap-action fittings can be used to facilitate a rapid battery change.

At the peripheral flange of the base 114 additional stabilizing ballast 154 can be incorporated, for example loose sand introduced through a fill-hole (not shown) on the upper ledge; or alternatively a permanent metal ring.

An on-off switch 146, for example, a push-pull, push-push or rotating action, is mounted in the underside of the lamp unit 110 to allow overall operational control of the lamp from outside the cone.

Multiple control functions may be incorporated, in addition to simply on-off, for example, flashing rate and intensity.

The cone 120, lamp 110 and internal fittings such as the casing 125, end caps 142, 151, 138, light tube 113 may all be formed, whether by moulding or otherwise, from synthetic plastics material for lightness and robustness.

The interior region 140 of the cone 120 may be utilized to store ancillary items, such as spare bulbs, cable etc. Thus the lamp head 110 may be connected to the batteries through a long cable length and, when detached from the cone head 117, may be used as a 'roaming' emergency inspection lamp - or simply position the lamp temporarily in a more convenient position, without having to relocate as a whole.

An access hatch or door (not shown) may be incorporated in the cone wall to facilitate access to the interior enclosure 140.

Similarly, multiple lamp heads may be provided, in a desired array or cluster, for enhanced illumination effect.

It should be appreciated that the overall assembly is generally weatherproof and moisture resistant, yet can readily be dismantled for access to the internals for maintenance or repair.

The cone neck head 115 supports the lamp 110 and in particular its upper end nose 117 contacts the underside of the lamp 110.

This neck 115 may be used as a support collar for lightweight barrier elements, bridging - ie. strung between - individual adjacent cones.

The nose 115 may be profiled on its upper nose surface 117, for example by a convex or concave section to allow movement of the lamp unit 110, in order to angle or re-direct the beam or spread of light; in this case the coupling 121 would be flexible to accommodate such relative movement.

The underside of the cone base, for example the profile of the caps 142 or 151, may be shaped to complement a ground fitting, such as a roadway 'cats eye' reflector, to provide supplementary locating restraint to the cone. Indeed, some form of security latch arrangement may be provided to resist unauthorised movement or removal of the cone.

In the event of impact through some mishap, the cone contents are restrained internally and so do not constitute an additional hazard.

An electrical or even optical fibre connection may be effected between the cone electrical and light source and any such external ancillaries for example, to provide an illuminated barrier.

The height and overall shape and proportions of the cone are determined by the desired circumstances of use. Thus, for example, a taller cone could be achieved by lengthening the tube 113 to raise the lamp unit 110 from the cone base 120, which would retain its stabilizing action.

The inside 112 of the lens 11 may also be ribbed to enhance the diffusion of light internally.

Any suitable form of light source 129 may be used, from tungsten filament bulbs as illustrated to neon, fluorescent and other discharge tubes.

The coupling 121 could be a telescopically slidable one to allow extension and retraction of the lamp 110.

The entire lamp assembly and power source may be configured to fit an otherwise conventional cone. Alternatively, the cone configuration itself may be adapted to complement the provision of illumination, for example with the nose lay-out and the weighted base with end cap closure.

Other power supply lay-outs may be adopted as may the lamp type and shape; for example a tall, narrow or short, squat and stubby shape.

The cone 'weighted' with the internal power supply in its base is more resistant to dislodgement or tipping over in the slipstream of passing vehicles.

The walls of the lamp unit 110 could be resiliently deformable to allow changes to the outer shape; for example, concertina - style crushing together of diffuser ribs into a short, squat condition and springing back into a 'fuller' or taller condition of greater prominence. This would be in a way the equivalent of a 'dim/dip' mode of illustration, reverting to a 'main beam' mode.

Stacking of the cones is possible with the internal power unit removed, but with the lamp unit in situ.

The relative sizes of the lamp unit 110 and cone 120 may be varied; in particular, larger lamp units 110 than that depicted in Figure 1 may be utilised.

The cone is suitable for road or any other situation where a combined marker/barrier and warning indication is required.

The integration of the light and power source within the body of the cone obviates the hazard constituted by simply draping separate lights from a cone.

The lens may be arranged to furnish a general diffuse spread of downwardly-directed illumination and a more intense focused warning beam more horizontally, although not to the extent of constituting an irritation or hazard to, say, a driver's line of vision.

Standard cone sizes might enhance successive heights of 0.5, 0.75 and 1.0 metres.

The outer surface of the cone can be furnished with reflective material to prescribed colours; the downwards illumination from the lamp unit promoting the surface visibility of such material.

An electrical socket connection (not shown) in the cone wall for re-charging may be provided to avoid having to remove the batteries 131, 132.

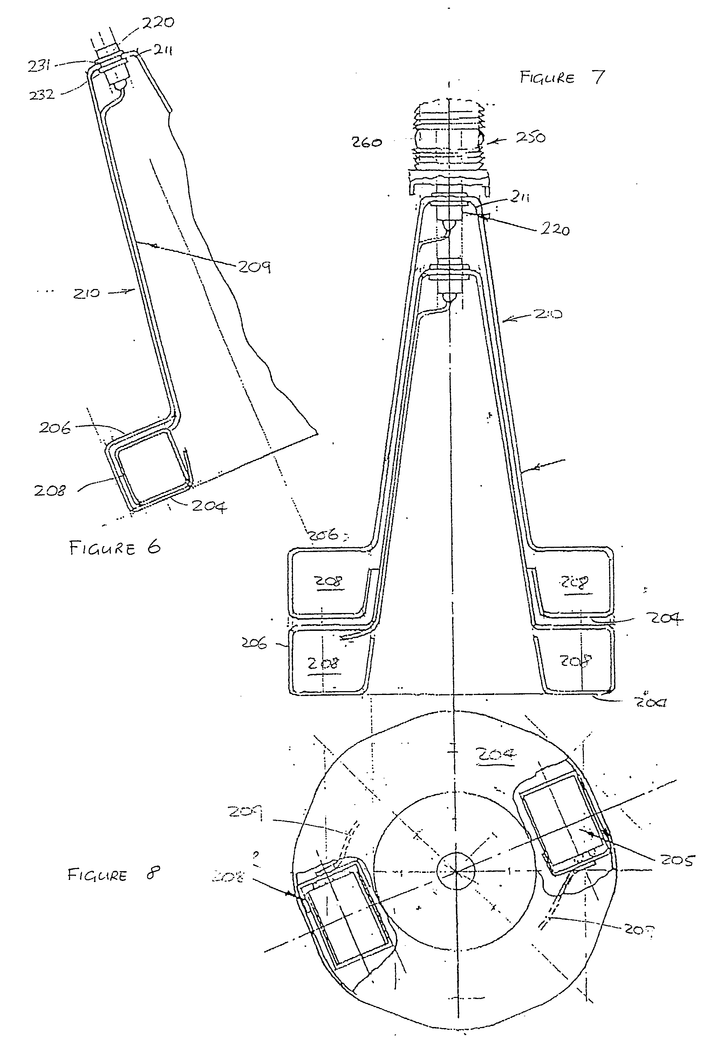

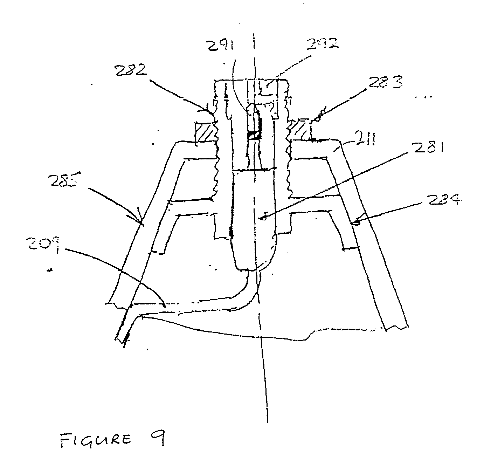

Figures 6 through 9 show a preferred version of the cone configuration for conformity with some currently prevailing road traffic or other highways regulations, and to retain the important advantage of stacking of cones with themselves - and indeed optionally with conventional or other types of cone.

Stacking is particularly advantageous for smaller, eg. 30 inch of 40 inch cone heights and even more so, if not essentially for the compact 20 inch cone.

The cone base 206 incorporate an annular chamber or housing 208 containing a power supply, such as (re-chargeable) dry or sealed cells 205 - of which their may be one or more according to the power consumption of the lamp and operational life required between recharging. For balance and stability of the cone and cone base, the batteries may be disposed in diametrically-opposed pairs - or even all around the periphery of the bone case 206.

Cables 209 take the current from the batteries 205 up the inside side wall of the cone to a lamp connector and mounting assembly 220, itself mounted in the upper nose 211 of the cone 210 by opposed gripping/locking washers 231, 232.

Access to the batteries may be through apertures in the base wall, with removable blanking plates or a base plate removable in its entirety - for example, with a snap-action or clip-on fit.

As before, a lamp assembly 250 with a protective, weatherproof diffuser lens 260 is mounted upon the connector 220.

The underside or base surface or floor 204 of the cone 210 represents the ground-engaging surface and forms a sealed or weather-resistant housing for the batteries 205, whose individual containers 208 are desirably also sealed or moisture-resistant.

As Figure 7 makes clear, the cones of Figure 6, with their annular base configuration may be stacked one upon another, with the lamp 250 removed for the inner cones.

In view of the relatively thin-walled nature of the cone, special provision may be made, as depicted in Figure 9, for the mounting of the lamp assembly 250.

Thus, referring to Figure 9, a conical or tapered washer 284 is carried at the lower end of an externally-threaded connector tube 282, upon whose upper end is threaded a locking washer or nut 283 bearing upon the upper end of the cone nose 211.

The conical lower washer 284 has a peripheral conical flange, mating with the inner conical profile of the cone wall body 285, so that, as the upper washer 283 is turned, the lower washer 284 is progressively brought firmly up against the side walls -wedging the connector 282 and an internal lamp bulb fitting 281, with electrical contacts 291, 292, firmly into position.

In this way, the mounting loads are spread over a larger area, so flexing of the lamp 250 is inhibited, in favour of a more rigid overall lamp mounting.

## Claims

1. An illuminated warning or marker cone comprising:
a tapered cross-section or conical base portion (210);
a power supply housing (208) located within the base portion;
a light source (250) mounted upon the cone nose; and
a connector (220) between the light source and power supply housing.

2. A warning or marker cone, as claimed in Claim 1, incorporating an integral annular base chamber for said power supply, to allow cone stacking with the power supply in situ.

3. A warning or marker cone, as claimed in Claim 1, incorporating a wedge-action mounting for the light source, spreading the mounting loads over the side walls and nose of the cone.

4. A warning or marker cone , as claimed in Claim 2, incorporating one or more individually weather-resistant battery casings in the power supply housing.

5. A warning or marker cone, as claimed in Claim 1, incorporating a releasable light source or lamp mounting, to facilitate lamp removal for cone stacking.

6. A warning or marker cone, as claimed in Claim 1, incorporating an integrated light source or lamp detachable mounting, power supply connector and electrical switch for controlling the mode of operation of the lamp.

WEBB Ronald Richard

FIG.-1

WEBB Ronald Richard

FIG.-2

WEBB Ronald Richard

FIG.- 3

FIG.- 4

FIG.- 5·

WEBB Ronald Richard

FIGURE 7

220
231
211
232

209
210

206
208
204

FIGURE 6

260
250

211
220

210

206
208

204

206
208
204

204

209
208

205

209

FIGURE 8

WEBB Ronald Richard

FIGURE 9

<table>
<tr><td>
**European Patent Office**
</td><td>
**EUROPEAN SEARCH REPORT**
</td><td>
Application Number

EP 89 30 1597
</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 081 348 (NORRIS)<br>* Page 1, lines 5-9,31-37,49-54,75-83,105,106,118-120; page 2, lines 3-5,7,18-22,28-33,55,56,60,61,65,66,77-80,83-85,113-123; figure 1 * | 1,2,4-6 | E 01 F 9/01<br>F 21 Q 3/00<br>F 21 V 21/10 //<br>B 60 Q 7/00 |
| Y | GB-A- 891 693 (LEMELSON)<br>* Page 1, lines 9-11,34-37; page 2, lines 6-11,19-23,45-47,63-66,69-77,84-88,95-98,102-105,108-120,124-130; figures 1,2 * | 1,4 | |
| A | | 5,6 | |
| Y | GB-A-2 190 944 (McGOLDRICK)<br>* Page 1, lines 41-44; page 2, lines 106-121,124-130; page 3, lines 1-4,17-23; figures 8,9 * | 2 | |
| A | | 1,6 | |
| Y | GB-A-2 039 354 (KENT COUNTY COUNCIL)<br>* Page 1, lines 25-29,32-39,55-59,69-76,110-118; page 2, lines 20-28,47-53; figures 1,2 * | 5 | TECHNICAL FIELDS SEARCHED (Int. Cl.4)<br><br>E 01 F |
| A | | 1,3,6 | |
| Y | DE-A-2 409 045 (BRITISCH)<br>* Page 1, lines 1-5,9-15,22-24,28-32; page 2, lines 5,6,12-17; page 3, lines 6-14,27,28; figures 2,5,7 * | 6 | |
| A | ---      -/- | 1,4 | |

The present search report has been drawn up for all claims

| Place of search | Date of completion of the search | Examiner |
|---|---|---|
| THE HAGUE | 19-05-1989 | SCHUMAN R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P0401)

European Patent
Office          **EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 140 547  (BICHARD) <br> * Page 1, lines 24-34,38-40,44-46,60-63; page 2, lines 3,6-8,15-18,25-28,36; figures * | 1,5,6 | |
| A | DE-A-1 516 604  (BRITSCH) <br> * Page 1, lines 1-4; page 2, lines 22,23; page 3, lines 1-10,13-16; page 4, lines 19,20; page 5, lines 1-7,13,14,19-22; page 6, lines 6-10; page 6, line 20 - page 7, line 9; figures * | 1,5,6 | |
| A | GB-A-1 062 624  (HALROY PRODUCTS) <br> * Page 1, lines 10-13,45-56,61-63; page 2, lines 47-50,55-57,81-90; page 3, lines 87-92,96-100; figures 2,4 * | 1,5,6 | |
| A | GB-A-1 603 824  (DEVONS BOLLARD LTD) <br> * Page 1, lines 83-93; page 2, lines 1-8,34-42,54-65,73-77,84-87; figures 1,2 * | 1,6 | |
| A | FR-A-2 064 701  (GUILLOT) | | TECHNICAL FIELDS SEARCHED (Int. Cl.4) |
| P,A | GB-A-2 197 900  (POLICON) <br> * Page 1, lines 4-16,21-24; page 2, lines 31-35; page 3, lines 1-11,16-23; figures 1,1a,4,5 * | 1,3,5 | |

The present search report has been drawn up for all claims

| Place of search | Date of completion of the search | Examiner |
|---|---|---|
| THE HAGUE | 19-05-1989 | SCHUMAN R. |

EPO FORM 1503 03.82 (P0401)